(19) Europäisches Patentamt
European Patent Office
Office européen des brevets

(11) Veröffentlichungsnummer : **0 057 937**
**B2**

(12) # NEUE EUROPÄISCHE PATENTSCHRIFT

(45) Veröffentlichungstag der neuen Patentschrift : **30.12.86**

(51) Int. Cl.⁴ : **D 06 M 15/643**

(21) Anmeldenummer : **82100947.9**

(22) Anmeldetag : **10.02.82**

(54) **Verfahren zur Imprägnierung von organischen Fasern.**

(30) Priorität : **10.02.81 DE 3104582**

(43) Veröffentlichungstag der Anmeldung : **18.08.82 Patentblatt 82/33**

(45) Bekanntmachung des Hinweises auf die Patenterteilung : **25.07.84 Patentblatt 84/30**

(45) Bekanntmachung des Hinweises auf die Entscheidung über den Einspruch : **30.12.86 Patentblatt 86/52**

(84) Benannte Vertragsstaaten :
**AT BE CH DE FR GB IT LI NL**

(56) Entgegenhaltungen :
**EP-A- 0 039 783**
**DE-A- 1 594 953**
**DE-A- 2 621 460**
**DE-A- 2 726 108**
**DE-A- 2 942 786**
**DE-B- 2 335 751**
**FR-A- 1 419 968**
**GB-A- 2 075 040**
**US-A- 3 268 465**
**US-A- 4 098 701**
**US-A- 4 152 273**

(73) Patentinhaber : **WACKER-CHEMIE GMBH**
**Prinzregentenstrasse 22**
**D-8000 München 22 (DE)**

(72) Erfinder : **Huhn, Karl, Dr. Dipl.-Chem.**
**Bachstrasse 16**
**D-8263 Burghausen (DE)**
Erfinder : **Marwitz, Heinrich, Dr. Dipl.-Chem.**
**Marienberger Strasse 48 f**
**D-8263 Burghausen (DE)**

**EP 0 057 937 B2**

Jouve, 18, rue St-Denis, 75001 Paris, France

**Beschreibung**

Beispielsweise aus US 4 098 701 (ausgegeben 4. Juli 1978, P.M. Burrill und Mitarbeiter, Dow Corning Limited) ist es bereits bekannt, organische Fasern mit Organopolysiloxan, das zusätzlich zu Diorganosiloxaneinheiten, worin die beiden organischen Reste einwertige Kohlenwasserstoffreste sind, je Molekül mindestens zwei einwertige SiC-gebundene organische Reste mit basischem Stickstoff enthält, organopolysiloxan mit mindestens 3 Si-gebundenen Wasserstoffatomen je Molekül und Katalysator für die Kondensation von Si-gebundenen kondensationsfähigen Gruppen aus wäßriger Emulsion zu behandeln.

Gegenstand der Erfindung ist ein Verfahren zur Imprägnierung von organischen Fasern mit einer wässrigen Emulsion, die

(1) ein Organopolysiloxan, das zusätzlich zu Diorganosiloxaneinheiten, worin die beiden organischen Reste einwertige Kohlenwasserstoffreste sind, je Molekül mindestens zwei SiC-gebundene organische Reste mit basischem Stickstoff enthält,

(2) ein Organopolysiloxan mit mindestens 3 Si-gebundenen Wasserstoffatomen je Molekül,

(3) einen Katalysator für die Kondensation von Si-gebundenen kondensationsfähige Gruppen und

(4) einen Emulgator enthält, dadurch gekennzeichnet, daß die SiC-gebundenen organischen Reste mit basischem Stickstoff vom Organopolysiloxan (1) in Monoorganosiloxaneinheiten vorliegen, daß in der wäßrigen Emulsion zusätzlich zu den vorstehend genannten Stoffen (1), (2), (3) und (4),

(5) ein in den endständigen Einheiten je eine Si-gebundene Hydroxylgruppe aufweisendes Diorganopolysiloxan, dessen organische Reste frei von basischem Stickstoff sind, vorliegt und daß (6) gegebenenfalls weitere Stoffe vorliegen.

Im Gegensatz zu den bisher bekannten Verfahren dieser Art verleiht das erfindungsgemäße Verfahren den gemäß diesem Verfahren behandelten organischen Fasern nicht nur gute Sprungelastizität. Die erfindungsgemäß behandelten Fasern können vielmehr in vorherbestimmbarem Ausmaß auch Wasserabweisungsvermögen haben. Ferner haben textile Flächengebilde aus erfindungsgemäß imprägnierten organischen Fasern hohe Dimensionsstabilität und sind gut vernähbar. Alle diese durch das erfindungsgemäße Verfahren den organischen Fasern verliehenen Eigenschaften bleiben auch beim Reinigen der Fasern mit Wasser oder organischem Lösungsmittel erhalten.

Nach dem erfindungsgemäßen Verfahren können alle organischen Fasern imprägniert werden, die auch bisher mit Organopolysiloxanen imprägniert werden konnten. Es kann sich um natürliche oder synthetische Fasern handeln. Beispiele für derartige Fasern sind solche aus Keratin, insbesondere Wolle, Baumwolle, Rayon, Hanf, natürlicher Seide, Polypropylen, Polyethylen, Polyester, Polyurethan, Polyamid, Celluloseacetat und Gemischen aus solchen Fasern. Die Fasern können als Vliese, Fäden, Garne, Matten, Gewebe, gestrickte oder gewirkte Textilien, einschließlich Kleidungsstücken bzw. Teilen von Kleidungsstücken, vorliegen. Außer bei Wolle ist die Behandlung der Fasern in Form von textilen Flächengebilden bevorzugt.

Vorzugsweise beträgt die Gesamtmenge an Wasser, in dem die nichtwäßrigen Bestandteile der erfindungsgemäß verwendeten Emulsionen gelöst bzw. dispergiert sind, 35 bis 90 Gewichtsprozent, insbesondere 45 bis 60 Gewichtsprozent, jeweils bezogen auf das Gesamtgewicht der jeweiligen in den Verkauf gebrachten wäßrigen Emulsion und 60 bis 99 Gewichtsprozent, insbesondere 80 bis 95 Gewichtsprozent, jeweils bezogen auf bei der endgültigen Anwendung eingesetzte wäßrige Dispersion.

Die Diorganosiloxaneinheiten im Organopolysiloxan (1) können durch die allgemeine Formel

$$R_2SiO$$

wiedergegeben werden, wobei R gleiche oder verschiedene einwertige Kohlenwasserstoffreste bedeutet. Vorzugsweise enthalten diese Kohlenwasserstoffreste 1 bis 20 Kohlenstoffatome je Rest. Beispiele für Kohlenwasserstoffreste, die in den Diorganosiloxaneinheiten vom Organopolysiloxan (1) vorliegen können, sind Alkylreste, wie der Methyl-, Ethyl-, n-Propyl- und Isopropylrest sowie Butyl-, Octyl-, Tetradecyl- und Octadecylreste ; Alkenylreste, wie der Vinyl- und Allylrest sowie Hexenylreste ; cycloaliphatische Kohlenwasserstoffreste, wie der Cyclopentyl- und Cyclohexylrest ; aromatische Kohlenwasserstoffreste, wie der Phenylrest sowie Naphthylreste ; Alkarylreste, wie Tolylreste ; und Aralkylreste, wie der Benzylrest. Insbesondere wegen der leichteren Zugänglichkeit bestehen vorzugsweise mindestens 80 % der Anzahl der Kohlenwasserstoffreste in den Diorganosiloxaneinheiten vom Organopolysiloxan (1) aus Methylresten.

Die Monoorganosiloxaneinheiten, in denen die SiC-gebundenen organischen Reste mit basischem Stickstoff von Organopolysiloxan (1) vorliegen, sind vorzugsweise solche, die durch die allgemeine Formel

$$R_2^2NR^1(R^3O)_aSiO_{3-a/2}$$

wiedergegeben werden können. In dieser Formel bedeutet $R^1$ einen zweiwertigen Kohlenwasserstoffrest, $R^2$ Wasserstoff oder gleiche oder verschiedene Alkyl- oder Aminoalkylreste, $R^3$ gleiche oder verschiedene Alkylreste mit 1 bis 4 Kohlenstoffatomen je Rest und a 0, 1 oder 2.

Beispiele für zweiwertige Kohlenwasserstoffreste $R^1$ sind der Methylen- und Ethylenrest sowie Propylen-, Butylen-, Cyclohexylen-, Octadecylen-, Phenylen- und Butenylreste. Insbesondere wegen der leichteren Zugänglichkeit ist der n-Propylenrest bevorzugt.

Die Beispiele für Alkylreste R gelten im vollen Umfang auch für Alkylreste $R^2$.

Beispiele für Aminoalkylreste sind solche der Formeln

$H_2N(CH_2)_3—$,
$H_2N(CH_2)_2NH(CH_2)_3—$,
$H_2N(CH_2)_2—$,
$(H_3C)_2N(CH_2)_2—$,
$H_2N(CH_2)_5—$,
$H(NHCH_2CH_2)_3—$ und
$C_4H_9NHCH_2CH_2NHCH_2CH_2—$.

Vorzugsweise ist mindestens ein $R^2$ Wasserstoff.

Beispiele für Alkylreste $R^3$ sind insbesondere der Methyl-, Ethyl- und Isopropylrest.

Vorzugsweise besitzen die erfindungsgemäß verwendeten Organopolysiloxane (1) eine Viskosität von 10 bis 1 000 mPa · s bei 25 °C, insbesondere von 20 bis 100 mPa · s bei 25 °C.

Es kann eine Art von Organopolysiloxan (1) eingesetzt werden. Es kann aber auch ein Gemisch aus mindestens zwei verschiedenen Arten von Organopolysiloxan (1) eingesetzt werden.

Organopolysiloxan (1) wird vorzugsweise in Mengen von 0,4 bis 4 Gewichtsteilen je 10 bis 90 Gewichtsteilen von in den endständigen Einheiten je eine Si-gebundene Hydroxylgruppe aufweisendem Diorganopolysiloxan (5) eingesetzt.

Als Organopolysiloxane (2) mit mindestens 3 Si-gebundenen Wasserstoffatomen je Molekül werden solche der allgemeinen Formel

$$(CH_3)_3SiO(SiR_2{}^4O)_pSi(CH_3)_3,$$

wobei $R^4$ Wasserstoff oder gleiche oder verschiedene Reste mit der Bedeutung Methyl, Ethyl oder Phenyl und p eine ganze Zahl im Wert von 10 bis 500 bedeutet, mit der Maßgabe, daß an ein Si-Atom jeweils nur ein Wasserstoffatom gebunden ist und daß das Verhältnis von $R_2{}^4SiO$-Einheiten, in denen beide $R^4$ Kohlenwasserstoffreste sind, zu den $R^4HSi$-Einheiten, in denen $R^4$ ein Kohlenwasserstoffrest ist, 3 : 1 bis 1 : 4 ist, verwendet. Vorzugsweise bedeutet auch $R^4$ Methyl, wenn es nicht Wasserstoff ist.

Auch als Organopolysiloxane (2) mit mindestens 3 Si-gebundenen Wasserstoffatomen je Molekül können gleiche oder verschiedene Moleküle dieser Organopolysiloxanart eingesetzt werden.

Organopolysiloxan (2) mit mindestens 3 Si-gebundenen Wasserstoffatomen je Molekül wird vorzugsweise im Mengen von 1,2 bis 12 Gewichtsteilen je 10 bis 90 Gewichtsteilen Diorganopolysiloxan (5) eingesetzt.

Als Katalysatoren (3) für die Kondensation von Si-gebundenen kondensationsfähigen Gruppen können ebenfalls auch im Rahmen des erfindungsgemäßen Verfahrens beliebige Katalysatoren für die Kondensation von Si-gebundenen kondensationsfähigen Gruppen eingesetzt werden, die auch bisher in wäßriger Emulsion eingesetzt werden konnten. Beispiele für solche Katalysatoren sind insbesondere Carbonsäuresalze von Zinn oder Zink, wobei an diesen Metallen Kohlenwasserstoffreste direkt gebunden sein können, wie Dibutylzinndilaurat, Zinnoctoate, Di-2-ethylhexylzinndilaurat, Di-n-butylzinndi-2-ethylhexoat, Di-2-ethylhexylzinndi-2-ethylhexoat und Zinkoctoate. Weitere Beispiele für Katalysatoren (3) sind Alkoxytitanate, wie Butyltitanate und Triethanolamintitanat, sowie Zirkoniumverbindungen.

Es kann eine Art von Katalysator (3) verwendet werden. Es kann aber auch ein Gemisch aus mindestens zwei verschiedenen Arten von Katalysator (3), z. B. ein Gemisch aus Dibutylzinndilaurat und Butyltitanat, verwendet werden.

Katalysator (3) wird vorzugsweise in Mengen von 0,3 bis 6 Gewichtsteilen je 10 bis 90 Gewichtsteilen Diorganopolysiloxan (5) eingesetzt.

Wird ein besonders hohes Ausmaß des Wasserabweisungsvermögens der erfindungsgemäß imprägnierten organischen Fasern, insbesondere in Form von textilen Flächengebilden gewünscht, ist es bevorzugt, als mindestens einen Teil von Emulgator (4) mindestens ein Organosiloxan-Oxyalkylen Blockmischpolymerisat, in dem der Polyoxyalkylenblock bzw. die Polyoxyalkylenblöcke an den Organopolysiloxanblock bzw. die Organopolysiloxanblöcke durch SiOC-Bindung gebunden ist bzw. gebunden sind (4a), zu verwenden. Unter derartigen Blockmischpolymerisaten (4a) sind wiederum solche aus Dimethylpolysiloxan und Polyoxyethylen bzw. Polyethylenglykol bevorzugt. Mit steigendem Anteil an derartigen Blockmischpolymerisaten (4a) bei Emulgator (4) steigt das Ausmaß des Wasserabweisungsvermögens, d. h. der Hydrophobie, der erfindungsgemäß imprägnierten textilen Flächengebilde. Als andere Emulgatoren (4b) als Organosiloxan-Oxyalkylen-Blockmischpolymerisate mit SiOC-Bindungen können beliebige Emulgatoren verwendet werden, die für die Emulgierung von Organopolysiloxanen in Wasser auch bisher schon verwendet werden konnten. Beispiele für solche Emulgatoren (4b) sind nichtionogene Emulgatoren, wie Polyglykolether von Alkanolen oder Phenol bzw. Alkylphenolen, wie Polyoxyethylenalkylphenole, Polyoxyethylensorbitan-hexastearat, Polyoxyethylenisotridecylether, Trimethylnonylether

von Polyethylenglykol, das 6 bis 14 Ethylenoxydeinheiten je Molekül enthält, Polyoxyethylensorbitanoleat mit einer Verseifungszahl von 102 bis 108 und einer Hydroxylzahl von 25 bis 35, und anionische Emulgatoren, wie Natriumalkylarylpolyethylenglykolsulfonat.

Organosiloxan-Oxyalkylenblockmischpolymerisat (4a) mit SiOC-Bindung wird vorzugsweise in Mengen von 0 bis 20 Gewichtsteilen je 10 bis 90 Gewichtsteile Diorganopolysiloxan (5) eingesetzt.

Anderer Emulgator (4b) als Organosiloxan-Oxyalkylenblockmischpolymerisat mit SiOC-Bindung wird vorzugsweise in Mengen von 0 bis 20 Gewichtsteilen je 10 bis 90 Gewichtsteile Diorganopolysiloxan (5) eingesetzt.

Vorzugsweise beträgt die Summe der Gewichtsteile von Emulgator (4a) und (4b) mindestens 5 je 10 bis 90 Gewichtsteile Diorganopolysiloxan (5).

Bevorzugt als in den endständigen Einheiten je eine Si-gebundene Hydroxylgruppe aufweisende Diorganopolysiloxane, deren organische Reste frei von basischem Stickstoff sind, sind solche der allgemeinen Formel

$$HOSiR_2O(SiR_2O)_nH,$$

worin R die oben dafür angegebenen Bedeutung hat und n eine ganze Zahl mit einem solchen Wert ist, daß die durchschnittliche Viskosität dieser Diorganopolysiloxane (5) 500 bis 50 000 mPa · s bei 25 °C beträgt. Alle Ausführungen über die Reste R der Diorganosiloxaneinheiten im Organopolysiloxan (1) gelten im vollen Umfang auch für die organischen Reste im Organopolysiloxan (5).

Vorzugsweise beträgt die Viskosität vom Organopolysiloxan (5) 2 000 bis 10 000 mPa · s bei 25 °C.

Vorzugsweise beträgt die Summe der Gewichtsteile der jeweils verwendeten Bestandteile (1) bis (5) innerhalb der oben angegebenen Bereiche 100.

Wird ein Wasserabweisungsvermögen von erfindungsgemäß imprägnierten textilen Flächengebilden gewünscht, so wird gemäß einer bevorzugten Ausführungsform als mindestens ein weiterer Stoff durch Trimethylsiloxygruppen endblockiertes. Diorganopolysiloxan (7) mit einer Viskosität von 100 bis 10 000 mPa · s bei 25 °C, vorzugsweise 300 bis 1 000 mPa · s bei 25 °C mitverwendet. Alle Ausführungen über die Reste R der Diorganosiloxaneinheiten im Organopolysiloxan (1) gelten im vollen Umfang auch für die organischen Reste in den Diorganosiloxaneinheiten der Organopolysiloxane (7).

Vorzugsweise wird durch Trimethylsiloxygruppen endblockiertes Diorganopolysiloxan (7) mit einer Viskosität von 100 bis 10 000 mPa · s bei 25 °C in Mengen von 0 bis 90 Gewichtsteilen je 10 bis 90 Gewichtsteile Diorganopolysiloxan (5) verwendet und vorzugsweise beträgt auch die Summe der Gewichtsteile der jeweils verwendeten Bestandteile (1) bis (7) innerhalb der oben angegebenen Bereiche 100. Mit steigenden Mengen von durch Trimethylsiloxygruppen endblockiertem Diorganopolysiloxan (7) wächst das Wasserabweisungsvermögen von erfindungsgemäß imprägnierten textilen Flächengebilden.

Sogenannte « Knitterfrei-Ausrüstungen », wie Dimethyldihydroxyethylenharnstoff (DMDHEU) im Gemisch mit Zinknitrat, können ebenfalls als weitere Stoffe mitverwendet werden, insbesondere wenn ein zu imprägnierendes Flächengebilde aus Cellulose- oder Baumwollfasern oder Fasergemischen, die Cellulose- oder Baumwollfasern enthalten, besteht.

Um eine vorzeitige Vernetzung zu vermeiden, werden vorzugsweise Emulsionen, welche Organopolysiloxan (1), (5) und gegebenenfalls (7) enthalten, Emulsionen, welche Organopolysiloxan mit Sigebundenem Wasserstoff (2) enthalten, und Gemische aus Wasser und Kondensationskatalysator (3) voneinander getrennt hergestellt, die so erhaltenen drei verschiedenen Komponenten getrennt voneinander aufbewahrt und erst mehr oder weniger kurz von der endgültigen Anwendung miteinander vermischt und gegebenenfalls mit Wasser weiter verdünnt.

Das Auftragen von erfindungsgemäß verwendeter Emulsion auf die zu imprägnierenden organischen Fasern kann in beliebiger für das Imprägnieren von Fasern mit Flüssigkeiten geeigneter und vielfach bekannter Weise erfolgen, z. B. durch Tauchen, Streichen Gießen, einschließlich Sprühen aus Aerosolverpackung, Walzen oder Klotzen erfolgen.

Vorzugsweise werden die Emulsionen in solchen Mengen aufgetragen, daß die Gewichtszunahme der Faser nach dem Verdampfen des Wassers, also die Auflage, 1 bis 20 Gewichtsprozent, bezogen auf das Gewicht der Faser, beträgt.

Die Vernetzung oder Härtung der erfindungsgemäßen Imprägnierung auf der Faser erfolgt bei Raumtemperatur. Sie kann durch Erwärmen auf z. B. 50° bis 180 °C beschleunigt werden.

Erfindungsgemäß imprägnierte textile Flächengebilde, die hydrophob sind, eignen sich z. B. zur Herstellung von Regenbekleidung. Durch die erfindungsgemäß Imprägnierung wird bei Keratin, insbesondere Wolle, vor allem wenn das Keratin mit Chlor vorbehandelt, gespült und neutralisiert wurde, wie in BE-A-651 439 (Chemical Abstracts, Vol. 64, 8385 f, g) beschrieben, das Schrumpfen durch Verfilzen verhindert oder verringert sowie ein weicher und elastischer Griff erzielt.

In den folgenden Beispielen beziehen sich alle Angaben von Teilen und Prozentsätzen auf das Gewicht, soweit nichts anderes angegeben ist.

## Beispiel 1

In eine wäßrige Emulsion, die als andere Bestandteile als Wasser enthält

72 Teile eines in den endständigen Einheiten je eine Si-gebundene Hydroxylgruppe aufweisenden Dimethylpolysiloxans mit einer Viskosität von 5 000 mPa · s bei 25 °C,

3 Teile eines Umsetzungsproduktes aus in den endständigen Einheiten je eine Si-gebundene Hydroxylgruppe aufweisendem Dimethylpolysiloxan mit einer Viskosität von 100 mPa · s bei 25 °C und dem Silan der formel

$$H_2N(CH_2)_2NH(CH_2)_3Si(OCH_3)_3,$$

wobei dieses Umsetzungsprodukt eine Aminzahl (= Anzahl der ml 1-n-HCl, die zum Neutralisieren von 1 g Substanz erforderlich sind) von 3 und eine Viskosität von 40 mPa · s bei 25 °C hat.

11 Teile eines durch Trimethylsiloxygruppen endblockierten Organopolysiloxans aus 75 Molprozent Dimethylsiloxaneinheiten und 25 Molprozent Methylhydrogensiloxaneinheiten mit einer Viskosität von 130 mPa · s bei 25 °C,

6 Teile Di-2-ethylhexylzinndilaurat,

8 Teile Polyglykolether von Alkanol, hergestellt durch Umsetzung von Isotridecanol (1 Mol) mit Ethylenoxyd (etwa 10 Mol),

150 Teile DMDHEU,

56 Teile Zinknitrat,

wobei die 150 Teile DMDHEU einer Konzentration von 4 % in der Emulsion entsprechen, wird Baumwollgewebe getaucht und dann auf 100 % Flüssigkeitsaufnahme abgequetscht. Danach wird das so imprägnierte Gewebe 10 Minuten auf 150 °C erwärmt.

Das so erhaltene imprägnierte textile Flächengebilde besitzt einen weichen elastischen Griff, der auch nach mehrmaliger Feinwäsche bei 30 °C in einer Haushaltwaschmaschine erhalten bleibt. Es ist praktisch nicht hydrophob.

## Beispiel 2

In eine wäßrige Emulsion, die als andere Bestandteile als Wasser enthält

38 Teile des in den endständigen Einheiten je eine Si-gebundene Hydroxylgruppe aufweisenden Dimethylpolysiloxans mit einer Viskosität von 5 000 mPa · s bei 25 °C,

41 Teile eines durch Trimethylsiloxygruppen endblockierten Dimethylpolysiloxans mit einer Viskosität von 350 mPa · s bei 25 °C,

2 Teile des in Beispiel 1 näher beschriebenen Umsetzungsproduktes aus in den endständigen Einheiten je eine Si-gebundene Hydroxylgruppe aufweisendem Dimethylpolysiloxan und dem Silan der Formel

$$H_2N(CH_2)_2NH(CH_2)_3Si(OCH_3)_3,$$

6 Teile des in Beispiel 2 näher beschriebenen Organopolysiloxans mit Si-gebundenem Wasserstoff,

2 Teile Di-2-ethylhexylzinndilaurat,

8 Teile eines Dimethylsiloxan-Oxyethylen-Blockmischpolymerisats, in den der Polyoxyethylenblock an den Dimethylpolysiloxanblock durch SiOC-Bindung gebunden ist, wobei das Verhältnis der Dimethylsiloxaneinheiten zu den Ethylenoxydeinheiten etwa 1 : 6,5 beträgt und die Viskosität dieses Blockmischpolymerisats 250 mPa · s bei 25 °C beträgt,

3 Teile des in Beispiel 1 näher beschriebenen Polyethylenglykolethers von Isotridecanol,

150 Teile DMDHEU,

56 Teile Zinknitrat,

wobei die 150 Teile DMDHEU einer Konzentration von 4 % in der Emulsion entsprechen, wird ein Gewebe aus 35 % Baumwolle und 65 % Polyester getaucht und dann auf 100 % Flüssigkeitsaufnahme abgequetscht. Danach wird das so imprägnierte Gewebe 10 Minuten auf 150 °C erwärmt.

Das so erhaltene imprägnierte textile Flächengebilde besitzt einen weichen elastischen Griff, der auch nach 5 Feinwäschen bei 30 °C in einer Haushaltwaschmaschine erhalten bleibt.

Das Wasserabweisungsvermögen wird nach dem sogenannten « Spraytest » (AATCC 22-1967) geprüft. Es werden folgende Werte erhalten :

| Anzahl der 30 °C-Wäschen | 0 | 1 | 3 | 5 |
|---|---|---|---|---|
| Spraytest-Wert | 100 | 100 | 100 | 80 |

## Beispiel 3

Die in Beispiel 2 beschriebene Arbeitsweise wird wiederholt mit den Abänderungen, daß die Emulsion kein DMDHEU und kein Zinknitrat enthält, die Menge an in den endständigen Einheiten je eine Si-gebundene Hydroxylgruppe aufweisendem Dimethylpolysiloxan einer Konzentration von 1,9 % in der Emulsion entspricht und in die Emulsion ein Wollstoff mit einem Gewicht von etwa 400 g/m² anstelle des

Baumwoll-Polyester-Gewebes getaucht wird.

Das so erhaltene imprägnierte textile Flächengebilde ist dimensionsbeständig und hat einen weichen elastischen Griff. Das Wasserabweisungsvermögen nach AATCC 22-1967 liegt bei 90. Alle diese Eigenschaften sind auch nach 5 Feinwäschen bei 30 °C in einer Haushaltswaschmaschine praktisch unverändert.

Beispiel 4

Die in Beispiel 2 beschriebene Arbeitsweise wird wiederholt mit den Abänderungen, daß die Emulsion kein DMDHEU und kein Zinknitrat enthält, die Menge an in den endständigen Einheiten je eine Si-gebundene Hydroxylgruppe aufweisendem Dimethylpolysiloxan einer Konzentration von 1,2 % in der Emulsion entspricht und in die Emulsion ein Polyester-Gewirke anstelle des Baumwoll-Polyester-Gewebes getaucht wird.

Das so erhaltene imprägnierte textile Flächengebilde ist dimensionsbeständig und hat einen weichen elastischen Griff. Das Wasserabweisungsvermögen nach AATCC 22-1967 liegt bei 90. Alle diese Eigenschaften sind auch nach 5 Feinwäschen bei 30 °C in einer Haushaltswaschmaschine praktisch unverändert.

Beispiel 5

In eine wäßrige Emulsion, die als andere Bestandteile als Wasser enthält

32 Teile des in den endständigen Einheiten je eine Si-gebundene Hydroxylgruppe aufweisenden Dimethylpolysiloxans mit einer Viskosität von 5 000 mPa · s bei 25 °C,

24 Teile des durch Trimethylsiloxygruppen endblockierten Dimethylpolysiloxans mit einer Viskosität von 350 mPa · s bei 25 °C,

2 Teile des in Beispiel 1 näher beschriebenen Umsetzungsproduktes aus in den endständigen Einheiten je eine Si-gebundene Hydroxylgruppe aufweisendem Dimethylpolysiloxan und dem Silan der Formel

$$H_2N(CH_2)_2NH(CH_2)_3Si(OCH_3)_3,$$

8 Teile des in Beispiel 1 näher beschriebenen Organopolysiloxans mit Si-gebundenem Wasserstoff,

4 Teile Di-2-ethylhexylzinndilaurat,

4 Teile des in Beispiel 2 näher beschriebenen Dimethylsiloxan-Oxyethylen-Blockmischpolymerisats,

6 Teile des in Beispiel 1 näher beschriebenen Polyethylenglykolethers von Isotricanol,

wobei die 32 Teile des Dimethylpolysiloxans mit Si-gebundenen Hydroxylgruppen einer Konzentration von 1,7 % in der Emulsion entsprechen, wird ein Polyester-Gewirke getaucht und dann auf 100 % Flüssigkeitsaufnahme abgequetscht. Danach wird das so imprägnierte Gewirke auf 150 °C erwärmt.

Die Eigenschaften des so imprägnierten textilen Flächengebildes sind die gleichen wie diejenigen des Gewirkes, das gemäß Beispiel 4 imprägniert wurde, mit der Ausnahme, daß das Wasserabweisungsvermögen nach AATCC 22-1967 nur 80 beträgt. Dieser Wert bleibt auch nach 5 Feinwäschen bei 30 °C in einer Haushaltswaschmaschine unverändert.

## Patentansprüche

1. Verfahren zur Imprägnierung von organischen Fasern mit einer wäßrigen Emulsion, die

(1) ein Organopolysiloxan, das zusätzlich zu Diorganosiloxaneinheiten, worin die beiden organischen Reste einwertige Kohlenwasserstoffreste sind, je Molekül mindestens zwei einwertige SiC-gebundene organische Reste mit basischem Stickstoff enthält,

(2) ein Organopolysiloxan mit mindestens 3 Si-gebundenen Wasserstoffatomen je Molekül der allgemeinen Formel

$$(CH_3)_3SiO(SiR_2^4O)_pSi(CH_3)_3,$$

wobei $R^4$ Wasserstoff oder gleiche oder verschiedene Reste mit der Bedeutung Methyl, Ethyl oder Phenyl und p eine ganze Zahl im Wert von 10 bis 500 bedeutet, mit der Maßgabe, daß an ein Si-Atom jeweils nur ein Wasserstoffatom gebunden ist und daß das Verhältnis von $R_2^4SiO$-Einheiten, in denen beide $R^4$ Kohlenwasserstoffreste sind, zu den $R^4HSi$-Einheiten, in denen $R^4$ ein Kohlenwasserstoffrest ist, 3 : 1 bis 1 : 4 ist,

(3) einen Katalysator für die Kondensation von Si-gebundenen kondensationsfähigen Gruppen und

(4) einen Emulgator enthält,

dadurch gekennzeichnet, daß die SiC-gebundenen organischen Reste mit basischem Stickstoff vom Organopolysiloxan (1) in Monoorganosiloxaneinheiten vorliegen, daß in der wäßrigen Emulsion zusätzlich zu den vorstehend genannten Stoffen (1), (2), (3) und (4)

(5) ein in den endständigen Einheiten je eine Si-gebundene Hydroxylgruppe aufweisendes Diorganopolysiloxan, dessen organische Reste frei von basischem Stickstoff sind, vorliegt und daß

(6) gegebenenfalls weitere Stoffe vorliegen.

2. Verfahren nach Anspruch 1, dadurch gekennzeichnet, daß als ein weiterer Stoff durch Trimethylsiloxylgruppen endblockiertes Diorganopolysiloxan (7) mit einer Viskosität von 100 bis 10 000 mPa · s bei 25 °C mitverwendet wird.

3. Verfahren nach Anspruch 1 oder 2, dadurch gekennzeichnet, daß als weiterer Stoff bzw. zusätzlicher weiterer Stoff eine sogenannte « Knitterfrei-Ausrüstung » mit-verwendet wird.

4. Verfahren nach mindestens einem der Ansprüche 1 bis 3, dadurch gekennzeichnet, daß als organische Faser Wolle behandelt wird, die vor der Imprägnierung mit Chlor vorbehandelt, gespült und neutralisiert wurde.

**Claims**

1. Process for impregnating organic fibers with an aqueous emulsion comprising

(1) an organopolysiloxane which contains, in addition to diorganosiloxane units in which both organic radicals are monovalent hydrocarbon radicals, also, per molecule, at least two monovalent SiC-bonded organic radicals containing basic nitrogen,

(2) an organopolysiloxane containing at least 3 Si-bonded hydrogen atoms per molecule and having the general formula

$$(CH_3)_3SiO(SiR_2^4O)_pSi(CH_3)_3,$$

wherein $R^4$ represents hydrogen or the same or different radicals representing methyl, ethyl or phenyl, and p is an integer having a value of 10 to 500, with the proviso that in each case only one hydrogen atom is bonded to one Si-atom, and that the ratio of the $R_2^4SiO$-units, in which both $R^4$ are hydrocarbon radicals, and the $R^4HSi$-units, in which $R^4$ is a hydrocarbon radical, is 3 : 1 to 1 : 4,

(3) a catalyst for the condensation of Si-bonded condensable groups, and

(4) an emulsifier,

characterized in that the SiC-bonded organic radicals containing basic nitrogen in the organopolysiloxane (1) are present in mono-organosiloxane units, in that the aqueous emulsion contains, in addition to the above-mentioned substances (1), (2), (3) and (4), also

(5) a diorganopolysiloxane containing a Si-bonded hydroxy group in each terminal unit and the organic radicals of which are free of basic nitrogen, and in that

(6) optionally further substances are present.

2. Process according to claim 1, characterized in that, as a further substance, a trimethylsiloxy-terminated diorganopolysiloxane (7) having a viscosity of from 100 to 10,000 mPa · s at 25 °C is used concomitantly.

3. Process according to claim 1 or 2, characterized in that, as a further substance or as an additional further substance, a so-called « crease-resistant finish » is used concomitantly.

4. Process according to at least one of claims 1 to 3, characterized in that, as the organic fiber, wool which has been pretreated with chlorine, rinsed and neutralized before being impregnated is treated.

**Revendications**

1. Procédé d'imprégnation de fibres organiques avec une émulsion aqueuse qui renferme :

(1) un polyorganosiloxane qui, en plus de motifs diorganosiloxanes dans lequel les deux radicaux organiques sont des radicaux hydrocarbonés monovalents, contient, par molécule, au moins deux radicaux organiques monovalents liés à Si par l'un de leurs atomes de carbone et avant un azote basique,

(2) un polyorganosiloxane ayant au moins trois atomes d'hydrogène directement liés à Si par molécule, répondant à la formule générale

$$(CH_3)_3SiO(SiR_2^4O)_pSi(CH_3)_3,$$

dans laquelle $R^4$ désigne l'hydrogène ou des radicaux identiques ou différents qui sont des groupes méthyles, éthyles ou phényles et p un nombre entier de 10 à 500, sous réserve qu'il n'y ait à chaque fois qu'un seul atome d'hydrogène lié à Si et que le rapport des motifs $R_2^4SiO$, dans lesquels les deux $R^4$ sont des radicaux hydrocarbonés, aux motifs $R^4HSi$, dans lesquels $R^4$ est un radical hydrocarboné, soit de 3 : 1 à 1 : 4,

(3) un catalyseur pour la condensation de groupes condensables directement liés à Si, et

(4) un émulsionnant

caractérisé en ce que les radicaux organiques liés à Si par l'un de leurs atomes de carbone et ayant un azote basique du polyorganosiloxane (1) sont présents dans des motifs polyorganosiloxanes, en ce que

l'émulsion aqueuse contient, en plus des substances (1), (2), (3) et (4) précédemment indiquées :

(5) un polydiorganosiloxane qui présent dans chacun des motifs terminaux, un groupe hydroxyle directement liés à Si et dont les radicaux organiques sont exempts d'azote basique, et en ce que :

(6) d'autres substances sont éventuellement présentes.

2. Procédé suivant la revendication 1, caractérisé en ce qu'on utilise en même temps, comme substance supplémentaire, un polydiorganosiloxane (7) aux extrémités bloquées par des groupes triméthylsiloxy et ayant une viscosité de 100 à 10 000 mPa · s à 25 °C.

3. Procédé suivant l'une des revendications 1 et 2, caractérisé en ce qu'on utilise en outre, comme substance ou autre substance supplémentaire, un « apprêt infroissable ».

4. Procédé suivant au moins quelconque des revendications 1 à 3, caractérisé en ce que, comme fibres organiques, on traite une laine qui, avant d'être imprégnée, a été prétraitée par du chlore rincée et neutralisée.